# EUROPEAN PATENT APPLICATION

(11) **EP 2 747 343 A1**
(43) Date of publication of application: **25.06.2014**
(21) Application number: 13198559.0
(22) Date of filing: 19.12.2013
(51) Int. Cl.: H04L 12/24

(54) **Method for interaction recording product management, service delivery, and billing**

(30) Priority: 20.12.2012 US 201213721891
(71) Applicant: Cti Group (holding), Inc., Indianapolis, IN 46204-1767 (US)
(72) Inventor: Rao, Siddhartha, Indianapolis, IN Indiana 46228 (US); Sadler, Derek, Indianapolis, IN Indiana 46236 (US); Reimann, Jesse, Mooresville, IN Indiana 46158 (US); Roberts, Randy, Mooresville, IN Indiana 46158 (US); Stage, Russell, Camby, IN Indiana 46113 (US); Perrin, Leister, Brownsburg, IN Indiana 46112 (US); Walls, Scott, Indianapolis, IN Indiana 46217 (US)
(74) Representative: Gillard, Matthew Paul

(57) **Abstract**

Recording commercial, legal, and other interactions enable organizations and individuals to meet regulatory compliance, improve customer service, and eliminate fraud. The process of recording those interactions is progressively being performed by software products and delivered as an Internet or WAN hosted service by providers. Recording products are further becoming more functional, by adding additional capabilities onto the base process of recording, such as interaction analysis and reporting. The purpose of the invention is to enable providers to customize, fulfill, and invoice the services and capabilities of such a recording function offered to individuals and organizations of variable size and requirement.

## Description

### Field of the Invention

The present invention is directed to a method and system for offering an interaction recording system, for multiple subscribers, where services of the recording system can be customized to meet the specific requirements posed by a subscriber, serviced by that hosted interaction recording system, and enabling providers to measure usage by subscribers.

### Description of Related Art

Interaction recording is a well-established application requirement that has rapidly evolved. The requirement was initially focused on capturing interactions, safeguarding the physical medium of the interaction, and then creating paper or electronic transcripts of the interaction. That process was often manual and tedious.

For example, the interaction would often be recorded using analog mechanisms, manually transcribed, and then the original media would be stored in an inert physical location. If the original media (e.g. audio, video, image, or text) had to be retrieved and played, a manual indexing and retrieval process would have to be employed.

That interaction capture, recording, and playback mechanism evolved with a focus on computerization and digitization. Interactions were now intercepted and recorded in a digital form, with playback using computer applications, often hosted across a local area network (LAN). Additional applications were added to that capture and playback mechanism, such as mechanisms to automatically transcribe audio conversations, analyze the emotion or tenor of the conversation, annotate the interaction with markers and time-based indicators, as well as provide other analytic functions. Those functions were based upon the principle that the application was serving a single subscriber with a standardized application requirement.

Different subscribers have diverse, complex, and variable requirements from interaction recording applications. For example, one subscriber may have an occasional, on-demand, requirement to record an audio telephony conversation. Another subscriber, on the other hand, may have a far more complex and demanding requirement to record all voice, video, text, and social networking interactions. That subscriber may also have additional analytical, annotation, incident recreation, and reporting requirements on interactions captured.

With the evolution of Internet and WAN based hosted services, innovations have been made such that those applications can be managed and hosted by a provider, reducing application complexity while improving service availability for the subscriber. Those subscribers often share the resources, features, and functionality of a single platform. That enables all subscribers to benefit from the operational capabilities of the platform. That model is known commonly as a multi-tenant service delivery model.

Alternative mechanisms include creating specific "virtual instances" using platform techniques to create customized subscriber instances. For example, the provider may choose to host each subscriber on a separate physical or virtual instance of an interaction recording system. The challenges with that state of the art are that such approaches are inherently not capital efficient for the provider and also yield operational scalability difficulties.

The problem with current interaction recording services is that they do not enable the provider to easily stratify and segment the customer base with specifically customized product service offers. For example, one subscriber may require the ability to not only record voice interactions but also social media interactions, in contrast with another subscriber that requires the ability to record primarily voice interactions with automatic transcription capabilities.

There is therefore a need for, and it would be highly advantageous to have, a process and method for providing product management, service delivery, service authorization, and billing functions for an interaction recording service through a Service Delivery Provider.

### Summary of the Invention

It is first defined that a Service Delivery Provider serves Subscribers through a single multiple Subscriber service offering for the primary purpose of recording interactions and providing utilities to capture, store, manipulate, annotate, and analyze interactions.

Throughout the present disclosure, the term Subscriber is used to generally designate a consumer of services within the Service Delivery Provider. That includes, but is not limited to telephone numbers, individual end-user security logins or tokens, social media handles or security information, trading turret identifiers, mobile telephone or device identifying details, e-mail addresses, or other interaction identifying details or relationships. It should be noted that a Subscriber might represent an organization as well as an individual. For example, a Subscriber could be provisioned to represent an entire organization.

The term interaction is used to define an information exchange between human beings or computers that has intrinsic business, personal, or regulatory value in being stored and accessible for presentation. Examples of interactions include, but are not limited to, telephony conversations, personal computer (PC) desktop screen captures, short message service (SMS) or multimedia message service (MMS) messaging, or social media interaction.

It is further defined that a Service is an interaction recording or analytic utility delivered through the Service Delivery Provider. Service Delivery Providers may offer optionally unique, or non-unique, Services to Subscribers. Service Delivery Providers may also offer optionally metered or unmetered Services.

A Service represents a range of utilities that are applied to an interaction, including the utility of capturing or storing the interaction itself. For example, a Service may represent the amount of storage allocated to retain an interaction. A Service may also represent a utility to manipulate, analyze, or present a stored interaction. A Service, further, may represent the ability for a specific type of device to access an interaction. For example, in the exemplary embodiment of the invention, a Service is used to control Subscriber access to the Service Delivery Provider with a mobile device, such as a personal digital assistant (PDA) or cellular phone.

Services may have dependencies, in the sense that one Service is required to be available to be consumed in order for another Service to have utility. The Service Delivery Provider can combine Services into Service Packs, which represent a standardized Product Offer.

It is one object of the present invention to create a Service Authority that enables control of Service activation and authorization within a Service Delivery Provider where a Service Delivery Provider is a multiple Subscriber interaction recording service provider. That Service Authority creates a Service Model that is transmitted to the Service Delivery Provider in the form of an Authorization File.

It is another object of the present invention to create a mechanism for the Service Delivery Provider to optionally allocate, assign, and activate interaction-recording Services on a per Subscriber basis.

It is yet another object of the present invention to enable Service Delivery Providers to optionally delegate Service allocation, assignment, and usage responsibility to Subordinate Service Delivery Providers who in turn may delegate such facilities to other Subordinate Service Delivery Providers.

It is yet another object of the present invention for Service Delivery Providers or Subordinate Service Delivery Providers to optionally control the allocation, assignment, and usage of Services for a particular Subscriber.

It is yet another object of the present invention for Service Delivery Providers or Subordinate Service Delivery Providers to optionally control the allocation, assignment, and usage across a Collection of Subscribers ("Subscriber Groups").

In the preferred embodiment of the invention, those entities, and related entities, have a hierarchical, parent-child relationship resulting in a rooted tree (arborescence), with no limiting branching factor. For example, a Subordinate Service Delivery Provider may have a Subscriber, a Collection of Subscribers, or other Subordinate Service Delivery Providers as children.

As such, the term Node is used to define any element in the tree and generically refers to one of the following: a Service Delivery Provider, a Subordinate Service Delivery Provider, a Subscriber Group, or a Subscriber.

It is yet another object of the present invention for a Service, or a Collection of Services to be assigned ("Service Assignment" or "Assignment") to a Subscriber or Collection of Subscribers. Service Assignment is the process in which the Subscriber is authorized with the right to use a Service.

Usage of a Service by a Subscriber may be partial in nature. A Subscriber may be allocated a particular metered amount. A Subscriber, for example, may be assigned the ability to record a number of concurrent interactions but may only utilize a partial function of that assignment.

It is yet another object of the present invention for a Service, or a Collection of Services, to be allocated ("Service Allocation" or "Allocation") to a Subscriber. Service Allocation is the process in which a Service Delivery Provider, Subordinate Service Delivery Provider, or Collection of Subscribers is authorized to subordinately authorize the right to use Services to subordinate child Nodes. The right to use does not indicate utilization.

It is yet another object of the present invention to measure and report, in a summarized and detailed fashion, the metered usage or available usage of Services within the context of a Service Delivery Provider or any subordinate Nodes.

It is still another object of the present invention to provide a mechanism for Service Delivery Providers to transmit summary and detail Service utilization and metered records to a Billing System, which is used to provide usage and billing reporting for Subscribers, Collections of Subscribers, Subordinate Service Delivery Providers, as well as the Service Delivery Provider.

Those systems work in concert to provide a multi-tenant product management, service delivery, and billing system.

To achieve the above and other objects, the present invention is directed to a method for managing information recording for a plurality of subscribers, the method comprising: (a) storing, at an information recording service delivery provider, an authorization file that includes information representing a level of services available to one of the plurality of subscribers; and (b) automatically allocating services to be provided by the information recording service delivery provider to said one of the plurality of subscribers in accordance with the level of services.

The invention is further directed to a service delivery provider having the above functionality.

### Brief Description of the Drawings

A preferred embodiment of the present invention will be set forth in detail with reference to the accompanying drawings, wherein:
FIG. **1** is a block diagram showing an overview and the relationship of the major elements of the invention, specifically the relationship between a Service Authority, a Service Delivery Provider, and a Billing System;
FIG. **2** is a flow chart of the validation process involved when applying an Authorization File to a Service Delivery Provider;
FIG. **3** is an exemplary tree diagram describing the hierarchical and parent-child relationships between Service Delivery Providers, Subordinate Service Delivery Providers, Collections of Subscribers, and Subscribers;
FIG. **4** is a block diagram describing the layout of an Authorization File;
FIG. **5** is a tabular example of a billing report sent to a Billing System; and
FIG. **6** is a block diagram of a Service Delivery Provider.

### Detailed Description of the Preferred Embodiment

A preferred embodiment will be set forth in detail with reference to the drawings, in which like reference numerals refer to like elements or steps throughout.

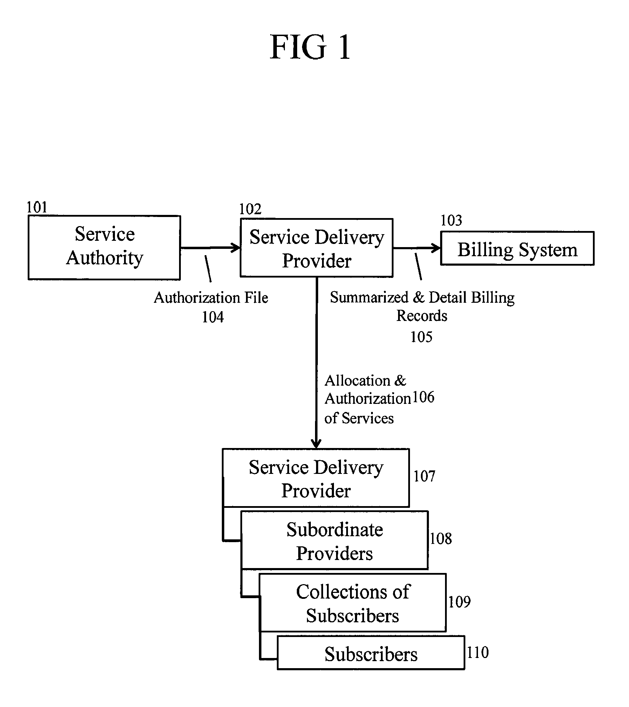

The first step of that Product Management method, depicted in FIG.**1**, is the authorization for a Service Delivery Provider to perform Allocation and Assignment of Services. That is accomplished by the Service Authority function **101.** In the preferred embodiment of the invention, the Service Authority is housed by a party independent of the Service Delivery Platform **102,** however that requirement is not essential or guaranteed.

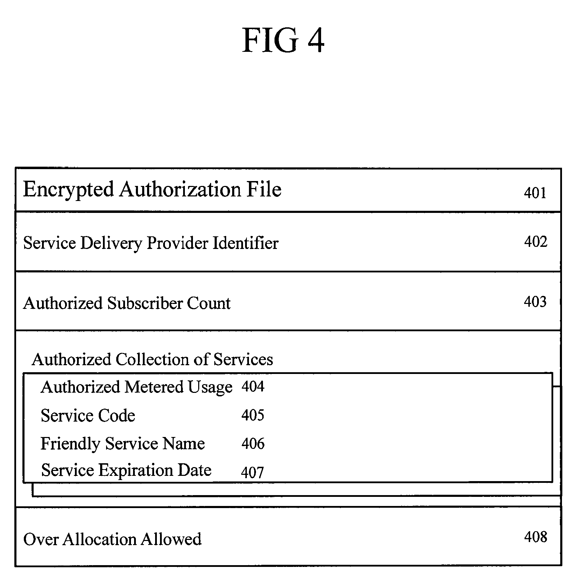

A Service Authority may authorize multiple Service Delivery Platforms **102.** The Service Authority **101** has a directory of Accounts, which represent named Service Delivery Providers. Those Accounts have an associated Service Model. That Service Model contains a representation of what Services and Collections of Services ("Service Bundles") are available to a particular Account or Service Delivery Provider. A Service Model will be serialized to an Authorization File as described in FIG. **4****.**

Each Service and Service Bundle listed within the Service Model also has an associated Authorized Metered Usage amount. That Authorized Metered Usage amount may be dynamic and partial in nature or may simply represent an availability of a particular Service.

Service Bundles can be defined per Account or template Service Bundles can be defined within the global scope of the Service Authority. Those template Service Bundles can be used to create Account specific Service Bundles. In the preferred embodiment of the current invention, that global Service Bundle template list is stored as an Extensible Markup Language (XML) configuration file for the Service Authority.

A Service has a unique identifying property, a Service Code **402,** which is used for identification across all elements of the invention: the Service Authority, Service Delivery Provider, and Billing System. That Service Code, in the preferred embodiment of the invention, is a string value for readability, but for expedience and scalability can also be represented as an integer or other scalar value.

In the preferred embodiment of the invention, the total number of Subscribers authorized for Subscription of Services on a Service Delivery Provider is specified in the Service Model **403.**

In the preferred embodiment of the invention, an element of the Service Model is a Service Expiration Date **407,** where the authorization granted by the Service Authority expires the Service Model at a given point in time. When the authorization expires, the Service Delivery Provider (and any subordinate Nodes) is unable to utilize Services prescribed in the Service Model.

Another element of the Service Model is a Service Delivery Provider Identifier **402.** That identifier enables a correlation between the Service Model, the Account, and the Service Delivery Provider and prevents a Service Model meant for a particular Service Delivery Provider to be applied to another Service Delivery Provider.

In the preferred embodiment of the invention, the final element of the Service Model is a Boolean property **408,** specifying whether the Service Delivery Provider can allocate, but not assign, a higher quantity of Services than authorized by the Service Authority ("Over Allocation"). That is typically leveraged for situations where Service Delivery Providers will over-subscribe access to Services.

After the Service Model has been specified to match the specified requirements between the Service Authority and Service Delivery Provider, the Service Model is committed to a transportable form ("Authorization File") **401** on the Service Authority and prepared for transmission to the Service Delivery Provider. In the preferred embodiment of the invention, the Authorized Metered Usage amounts specified in the Authorization File are correlated with specific Services rather than with Service Bundles, however it is conceivable that Service Bundles may be specified in addition to or in lieu of Services.

In the preferred embodiment of the invention, that format is Extensible Markup Language (XML), however any mutually agreeable format can be leveraged for transmission.

A form of cryptographic protection may be applied to the Authorization File to protect against tampering or modifying the Authorization File as well as guaranteeing the authenticity of the Authorization File **401.** In the preferred embodiment of the invention, that Authorization File **401** is encrypted using an asymmetric encryption algorithm. In the preferred embodiment of the invention, the Triple Data Encryption Algorithm, with a shared key (National Institutes of Standards and Technology (NIST) Special Publication 800-67 Revision 1, ISO/IEC 18033-3:2005) is used to ensure Authorization File integrity.

Transmission of the Authorization File **104** can occur via a number of mechanisms, including, but not limited to, Transport Control Protocol over Internet Protocol (TCP/IP), Hy-pertext Transfer Protocol (HTTP), HTTP over Transport Layer Security (TLS, HTTPS), Simple Mail Transfer Protocol (SMTP), or other protocols. The transmission of the Authorization File can be delivered over the public Internet, Wide Area Network (WAN), Local Area Network (LAN), or Virtual Private Network (VPN), or other mutually agreeable communication mediums. In the preferred embodiment of the present invention, the Authorization File is electronically transmitted and applied with manual application using a web browser via HTTP to the Service Delivery Provider.

Throughout the present disclosure, the term "Internet" is used to generally designate the global, linked web of millions of networks, which is used to connect computers all over the world. That includes, but is not limited to all intranet, private Internet and virtual private Internet networks.

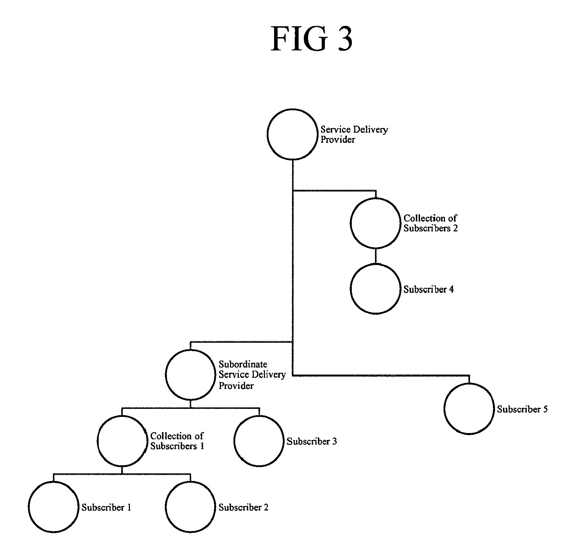

After transmission of the Authorization File to the Service Delivery Provider, the Authorization File is applied to the Service Delivery Provider to control and authorize the Allocation and Assignment of Services **106** by the Service Delivery Provider and any authorized subordinate Nodes **(107, 108, 109, 110).** In the preferred embodiment of the invention, the hierarchical arrangement or Nodes can be infinitely deep and wide as described in FIG. **3****.** It should be noted that in the preferred embodiment of the invention, the leaves of the tree are Subscribers.

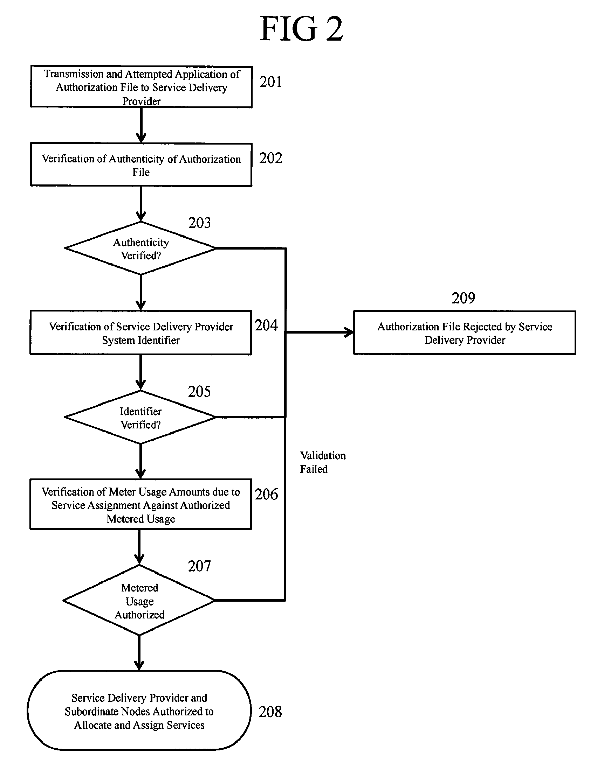

As part of that application process the following steps are taken as described in FIG. **2****.** The first step **202** after the application is attempted **201** is verifying the authenticity of the Authorization File by using the complementary decryption process specified in the preferred embodiment of the invention, if the Authorization File has optionally been encrypted. The second, optional, step **203** is verifying that the system identifier included in the Authorization File matches the system identifier of the Service Delivery Provider. If either the first or second step fails, the Authorization File application process is terminated **209** and no changes are made to the Service Delivery Provider.

The third step **206** confirms that the Authorized Metered Usage amounts contained in the Authorization File exceed or are equivalent to the Metered Usage amounts of any Service Assignments that are currently in use, or allocated (unless Over Allocation is specified in the Authorization File), on the Service Delivery Provider. If not, the application process is terminated with no changes to the Service Delivery Provider **209.**

The Service Delivery Platform now can Allocate and Assign Services to subordinate Nodes. The sum of all directly subordinate Node Metered Usage Allocation amounts cannot exceed the Metered Usage Allocation of the Node in question with respect to Service Delivery Providers, Subordinate Service Delivery Providers, or Collections of Subscribers.

In the preferred embodiment, if Over Allocation is specified, the Service Delivery Provider may Allocate Metered Usage which exceeds the Authorized Metered Usage Allocation as specified in the Authorization File. That facility, however, is not extended to any subordinate Node.

If Over Allocation is specified, during Assignment, the authorization of a Service for a Subscriber results in a check against the Authorization File to ensure that the summarized total of Assignments does not exceed the Authorized Metered Usage represented in the Authorization File. In the preferred embodiment, that check is performed for any Assignment operation.

In the preferred embodiment of the invention, Nodes and associated Allocation and Assignment records are stored in a relational database for expeditious retrieval, summarization, and reporting within the context of the Service Delivery Provider. The term relational database includes, but is not limited to, Oracle 11g, Microsoft SQL Server, Microsoft Access, Indexed Sequential Access Method (ISAM) data structures, in-memory data structures such as Oracle Times Ten, or other storage mediums.

In the preferred embodiment of the invention, the process of tabulating Allocation and Assignment is accomplished by performing a full and partial depth tree search of the Node hierarchy. That recursive search may be done at each Assignment or Allocation action to ensure integrity of the Metered Usage against the Authorized Metered Usage. It should be noted that that recursive tree search might not be necessary for all Allocation and Assignment operations. Further, pre-summarized recursive values might be available to prevent further recursion.

Due to the authorization bestowed by the Service Authority, the Service Delivery Provider now delivers Services to Subscribers. When a Subscriber attempts to access or interact with a Service Delivery Provider, the Subscriber's Assignment and authorization of a particular Service is verified to ensure usage is within bounds of the specified Authorized Metered Usage.

In the preferred embodiment of the invention, the process of Allocating Services to a Collection of Subscribers enables Subscribers within the Collection to be potentially presented access to the Service in an automated fashion. Further, when a Subscriber is added to a Collection of Subscribers, the Subscriber may automatically inherit Services Allocated to the Collection of Subscribers.

The Service Delivery Provider has the capability to now report on Assignment and Allocation of Services to defined Nodes. In the preferred embodiment of the invention, that reporting can be presented via the Internet, WAN, or LAN environment using a web browser. Access via a web browser, however, is neither mandatory nor exclusive.

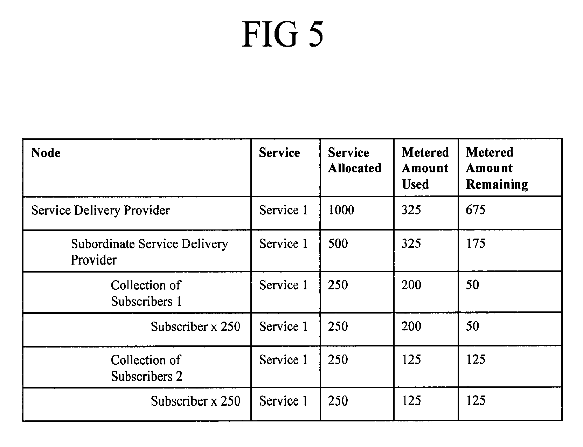

An exemplary form of the reporting provided is depicted in FIG. **5****.** In the preferred embodiment of the current invention, details about a particular Node, including, but not limited to, the Service Allocated, Assigned, and remaining Metered Amount is provided along with the details of any subordinate node.

The Service Delivery Provider **102** outputs Allocation and Assignment operations in the form of transactions **105** to the Service Billing System **103.** Those transaction ("Receipt") details include information about changes to Service Allocation and Assignment to Nodes within the Service Delivery Provider.

The Service Delivery Provider **102** further summarizes Metered Usage for Services authorized within the Service Delivery Provider. Those summarized details include, but are not limited to, the usage of particular Services, the Allocation of Services to particular Nodes within the Service Delivery Provider, as well as pre-summarized information of utility to the Service Billing process.

In the preferred embodiment of the invention, the Service Billing process is an externally provided Billing System used by the Service Delivery Process to extract remuneration from Subscribers. The Service Billing process calculates said remuneration from the Metered Usage.

The Service Billing process **103** then further provides a mechanism to access that summarized or detailed transaction information for remuneration and reporting purposes. The Receipts can be further aggregated to match the summarized information for the purposes of reconciliation and audit.

Those systems, acting in an orchestrated process, enable the product management, service configuration, and subscriber customizations required in an interaction recording system serving multiple Subscribers. In summary, they provide a mechanism that fulfills the objects of the invention.

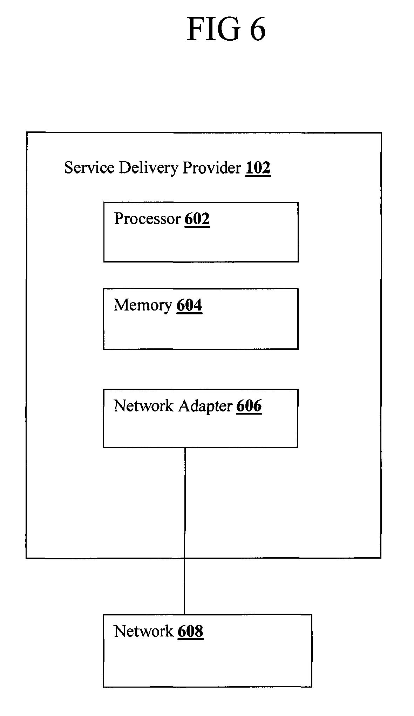

Figure 6 is a block diagram of a Service Delivery Provider **102.** The Service Delivery Provider includes a processor **602** for performing the operations disclosed herein, a memory (e.g., any suitable non-volatile memory) **604** for storing the authorization file and any other needed information, and a network adapter or other communication component **606** for communication with a network **608,**

While a preferred embodiment has been set forth in detail above, those skilled in the art will readily appreciate that other embodiments can be realized within the scope of the invention. For example, disclosures of specific standards or technologies are illustrative rather than limiting, as is the order in which steps are carried out. Therefore, the present invention should be construed as limited only by the appended claims.

## Claims

1. A method for managing information recording for a plurality of subscribers, the method comprising:
(a) storing, at an information recording service delivery provider, an authorization file that includes information representing a level of services available to one of the plurality of subscribers; and
(b) automatically allocating services to be provided by the information recording service delivery provider to said one of the plurality of subscribers in accordance with the level of services.

2. The method of Claim 1, wherein step (b) comprises verifying an authenticity of the authorization file.

3. The method of Claim 2, wherein the authorization file is encrypted, and wherein the authenticity is verified by decrypting the authorization file.

4. The method of Claim 2, wherein step (b) further comprises verifying that a system identifier included in the authorization file matches a system identifier of the information recording service delivery provider.

5. The method of Claim 2, wherein the authorization file further includes information representing an authorized metered usage, and wherein step (b) further comprises verifying that the authorized metered usage is not exceeded.

6. The method of Claim 5, wherein step (b) comprises allocating the services in excess of the authorized metered usage if the authorization file includes an indication that the services can be allocated in excess of the authorized metered usage.

7. The method of Claim 1, wherein step (b) comprises allocating the services in the information recording service delivery provider and in a plurality of subordinate providers.

8. An information recording service delivery provider for managing information recording for a plurality of subscribers, the information recording service delivery provider comprising:
a memory for storing an authorization file that includes information representing a level of services available to one of the plurality of subscribers; and
a processor for automatically allocating services to be provided by the information recording service delivery provider to said one of the plurality of subscribers in accordance with the level of services.

9. The information recording service delivery provider of Claim 8, wherein the processor is configured for verifying an authenticity of the authorization file.

10. The information recording service delivery provider of Claim 9, wherein the authorization file is encrypted, and wherein the processor is configured such that the authenticity is verified by decrypting the authorization file.

11. The information recording service delivery provider of Claim 9, wherein the processor is configured for verifying that a system identifier included in the authorization file matches a system identifier of the information recording service delivery provider.

12. The information recording service delivery provider of Claim 9, wherein the authorization file further includes information representing an authorized metered usage, and wherein the processor is configured for verifying that the authorized metered usage is not exceeded.

13. The information recording service delivery provider of Claim 12, wherein the processor is configured for allocating the services in excess of the authorized metered usage if the authorization file includes an indication that the services can be allocated in excess of the authorized metered usage.

14. The information recording service delivery provider of Claim 8, wherein the processor is configured for allocating the services in the information recording service delivery provider and in a plurality of subordinate providers.
